(19) Europäisches Patentamt / European Patent Office / Office européen des brevets

(11) **EP 2 347 590 B1**

(12) **FASCICULE DE BREVET EUROPEEN**

(45) Date de publication et mention de la délivrance du brevet:
**17.01.2018 Bulletin 2018/03**

(21) Numéro de dépôt: **09756012.2**

(22) Date de dépôt: **13.10.2009**

(51) Int Cl.:
*H04N 19/176* *(2014.01)*   *H04N 19/194* *(2014.01)*
*H04N 19/583* *(2014.01)*

(86) Numéro de dépôt international:
**PCT/FR2009/051945**

(87) Numéro de publication internationale:
**WO 2010/043809 (22.04.2010 Gazette 2010/16)**

(54) **PREDICTION D'UNE IMAGE PAR COMPENSATION EN MOUVEMENT EN AVANT**

BILDPRÄDIKTION MIT VORWÄRTSBEWEGUNGSKOMPENSATION

IMAGE PREDICTION WITH FORWARD MOTION COMPENSATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.10.2008 FR 0856974**

(43) Date de publication de la demande:
**27.07.2011 Bulletin 2011/30**

(73) Titulaire: **Orange**
**75015 Paris (FR)**

(72) Inventeurs:
• **PATEUX, Stéphane**
  **F-35700 Rennes (FR)**
• **CAMMAS, Nathalie**
  **F-35490 Sens De Bretagne (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**WO-A-2005/125218    WO-A-2006/137020**
**WO-A-2007/077243**

• **SUGIMOTO K ET AL: "Inter frame coding with template matching spatio-temporal prediction" INTERNATIONAL CONFERENCE ON IMAGE PROCESSING, vol. 1, 24 octobre 2004 (2004-10-24), pages 465-468, XP010784855 PISCATAWAY, NJ, USA ISBN: 978-0-7803-8554-2**
• **SHARAF A ET AL: "Motion compensation using spatial transformations with forward mapping", SIGNAL PROCESSING. IMAGE COMMUNICATION, ELSEVIER SCIENCE PUBLISHERS, AMSTERDAM, NL, vol. 14, no. 3, 4 January 1999 (1999-01-04), pages 209-227, XP004144075, ISSN: 0923-5965, DOI: 10.1016/S0923-5965(98)00009-5**
• **Yao Wang: "Experiment 8 VIDEO COMPRESSION", EE4414 --- Multimedia Communication Systems II, 5 October 2005 (2005-10-05), XP055331057, NY, USA Retrieved from the Internet: URL:https://web.archive.org/web/20060911221833/http:/eeweb.poly.edu/~yao/EE4414/EL514-exp8-video-comp.pdf [retrieved on 2016-12-21]**

**Description**

**1. Domaine de l'invention**

Le domaine de l'invention est celui du traitement d'images.

Plus précisément, l'invention concerne les techniques de prédiction mettant en oeuvre une compensation en mouvement en avant.

L'invention trouve notamment des applications dans le domaine du codage et du décodage d'un flux vidéo, constitué d'une série d'images successives, dans les codeurs vidéo à venir (H.265 ou ISO-MPEG).

**2. Art antérieur**

On décrit ci-après l'art antérieur relatif à la prédiction d'images dans le domaine du codage ou du décodage de séquences d'images.

On connaît déjà des schémas de codage vidéo hybride, par lesquels les images sont codées en deux phases, la première étant une phase de prédiction par compensation en mouvement, suivie par une deuxième phase de codage de résidus de prédiction.

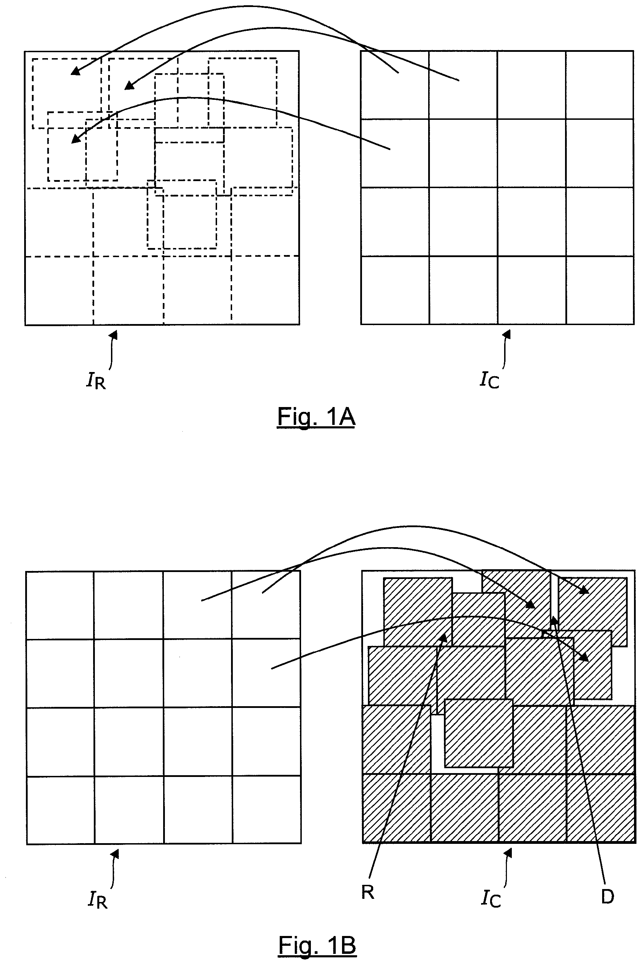

Parmi les techniques de compensation en mouvement, on connaît la compensation de mouvement dite en « arrière » ("Backward Motion Compensation", en anglais) dont un exemple est illustré schématiquement en figure 1A. La compensation en mouvement en arrière permet de prédire une image $Ic$, à partir d'au moins une image de référence $Ir$, en tenant compte de vecteurs de déplacement pointant de l'image courante vers une ou plusieurs images de référence.

Cette prédiction comprend deux étapes :

- l'image à prédire $Ic$ est découpée en un ensemble de blocs ;
- pour chaque bloc de cette image, une prédiction est établie à l'aide d'un vecteur de déplacement par rapport à l'image de référence $Ir$.

Ainsi, cette opération de prédiction revient à déplacer tout point d'un bloc de l'image de référence de la valeur du vecteur de déplacement associé au bloc considéré, et permet de fournir pour chaque point de l'image à prédire une valeur de prédiction. Un point de l'image à prédire correspond classiquement à un pixel.

Par ailleurs, on connaît aussi une autre technique de compensation en mouvement dite « en avant » ("Forward Motion Compensation", en anglais), dont un exemple est illustré schématiquement en figure 1B. La compensation en mouvement en avant permet de prédire une image $Ic$, à partir d'au moins une image de référence $Ir$, en tenant compte de vecteurs de déplacement pointant d'une ou plusieurs images de référence $Ir$ vers l'image courante $Ic$.

Cette prédiction comprend deux étapes :

- l'image de référence $Ir$ est découpée en un ensemble de blocs de référence ;
- pour chaque bloc de référence de l'image de référence, un déplacement est établi, et pour chaque point de ce bloc, on affecte au point de l'image à prédire $Ic$ la valeur du point de l'image de référence, déplacée du vecteur de déplacement.

Le document SHARAF A ET AL: "Motion compensation using spatial transformations with forward mapping", SIGNAL PROCESSING: IMAGE COMMUNICATION, ELSEVIER SCIENCE PUBLISHERS, AMSTERDAM, NL, vol. 14, no. 3, 4 janvier 1999 (1999-01-04), pages 209-227,ISSN: 0923-5965, DOI: 10.1016/S0923-5965(98)00009-5, présente un exposé sur ladite technique de compensation en mouvement en avant. Un inconvénient de cette technique de compensation de mouvement dite en « avant » est qu'elle engendre l'apparition de zones de recouvrement lorsque plusieurs blocs se chevauchent, notées $R$ sur la figure 1B. De plus, l'utilisation de déplacements différents sur les blocs projetés en avant engendre également des zones de découvrement entre les blocs, notées $D$ sur la figure 1B.

L'absence d'affectation de valeurs dans les zones découvertes limite les performances du schéma de codage proposé.

Le problème de reconstruction des valeurs dans ces zones de découvrement est un problème bien connu de restauration connu en anglais sous le nom de « inpainting ».

Plusieurs solutions à ce problème ont été proposées.

Par exemple, le document « Fast Texture Synthesis using Tree-structured Vector Quantization » (L. Y. Wei, M. Levoy, Proceeding of SIG-GRAPH 2000, pp 479-488, Juillet 2000) introduit la technique dite du « template matching ». Cette technique exploite la recherche d'un motif similaire dans une image de référence à partir des observations connues dans un voisinage de la zone à reconstruire.

Cette technique comprend trois étapes :

- définition d'un « template », ou gabarit, d'informations déjà connues dans le voisinage d'un ensemble de pixels à reconstruire (bloc de taille 2x2 dans le document cité) ;
- recherche dans une zone de recherche d'une zone similaire au template (« candidate neighborhood ») ;
- attribution aux pixels à reconstruire des valeurs du bloc associé à la zone recherchée la plus similaire.

Le document « Intra prediction by template matching » (T. K. Tan, C. S. Boon, Y. Suzuki, Proceedings of ICIP 2006, pp 1693-1696) étend cette technique à un codeur H.264 en mode intra. Cette technique offre une bonne qualité de restauration.

Cependant, un inconvénient de ces techniques de l'art antérieur est la complexité de leur mise en oeuvre, qui requière une recherche de « template » (gabarit) à utiliser via des techniques de recherche du maximum du produit de corrélation parmi un grand nombre de candidats. Ainsi, cette technique est d'une complexité très élevée pour être efficace.

### 3. Exposé de l'invention

L'invention propose une solution nouvelle qui ne présente pas l'ensemble de ces inconvénients de l'art antérieur, sous la forme d'un procédé de prédiction d'une image par compensation en mouvement en avant, à partir d'au moins une image de référence selon la revendication 1. L'invention propose aussi des solutions sous la forme des dispositifs selon les revendications 7 ou 12, et sous la forme d'un programme d'ordinateur selon la revendication 13. Selon l'invention, un tel procédé met en oeuvre les étapes suivantes, pour au moins un bloc d'une image de référence, dit bloc de référence :

- détermination d'au moins une information de déplacement, représentative d'un déplacement entre le bloc de référence et un bloc correspondant dans l'image à prédire ;
- détermination d'au moins un bloc élargi, comprenant le bloc de référence et au moins un point d'un bloc adjacent au bloc de référence dans l'image de référence ;
- détermination d'une valeur de prédiction pour au moins un point de l'image à prédire, à partir du ou des bloc(s) élargi(s) et de la ou des informations de déplacement déterminée(s) pour le bloc de référence.

L'invention propose ainsi une nouvelle technique de prédiction par compensation en mouvement en avant, exploitant une prédiction spatio-temporelle à faible complexité.

Pour ce faire, l'invention propose de définir pour l'image de référence un découpage en un ensemble de blocs de référence de forme arbitraire. Ces blocs de référence peuvent notamment être de taille différente. Il est également possible que l'ensemble de ces blocs de référence recouvre totalement ou non l'image de référence et que les blocs se recouvrent ou non.

Par soucis de simplification, et de manière non limitative, l'image de référence est associée à un ensemble de blocs de référence carrés, de taille fixe, ne se chevauchant pas, et recouvrant toute l'image de référence.

Pour un bloc de référence, et par exemple pour tous les blocs de référence, on détermine une information de déplacement représentative d'un déplacement entre le bloc de référence et un bloc correspondant dans l'image à prédire. Par exemple, l'information de déplacement peut être représentative d'un déplacement appartenant au groupe comprenant :

- une translation ;
- une déformation affine ;
- une déformation homographique ;
- un modèle paramétrique de déformation ;
- une rotation ;
- un cisaillement.

En particulier, la technique proposée permet de déterminer un bloc élargi pour lequel on réalise une compensation de mouvement en avant dans l'image à prédire. Ce bloc élargi comprend au moins le bloc de référence et au moins un point (ou pixel) d'un bloc voisin du bloc de référence dans l'image de référence.

Ainsi, on détermine une valeur de prédiction pour au moins un point de l'image à prédire, à partir du bloc élargi et de l'information de déplacement relative au bloc de référence. Un tel procédé de prédiction permet notamment de reconstruire des points qui seraient découverts, c'est-à-dire non-prédits dans le cas d'une compensation en mouvement en avant classique.

L'invention s'applique notamment au codage de séquences d'images ou de scènes exploitant une technique de prédiction basée sur une compensation en avant, ou bien encore représentées à l'aide de tubes de mouvement, où un tube de mouvement correspond à un bloc de pixels évoluant au cours du temps. Au cours de cette évolution, le tube peut se déformer, par exemple pour prendre en compte le mouvement apparent, ou bien encore si le nombre de pixels présents dans la zone prédite par le tube augmente ou diminue en termes de nombre de pixels. Ce tube peut également se raffiner, par exemple en passant au niveau sous-pixellique du bloc. L'invention permet notamment de déterminer les déformations subies par un tube.

En particulier, on rappelle qu'un tube de mouvement est défini par au moins les informations suivantes :

- un bloc de pixels de référence comprenant des informations de texture de référence ;
- des instants de début de tube et de fin de tube ;
- des informations de transition, permettant de mettre à jour ledit bloc de référence à au moins un instant t de ladite séquence.

Une telle technique de représentation de séquences d'images est notamment décrite dans la demande de brevet français n°0756007 déposée le 25 juin 2007 au nom du même Demandeur.

Selon une caractéristique particulière de l'invention, le procédé de prédiction met en oeuvre :

- une première passe de prédiction à l'aide d'au moins un bloc de référence, délivrant une première image prédite ;
- une étape de détection d'au moins un point non-prédit dans la première image prédite ;
- et, en cas de détection positive, une deuxième passe de prédiction à l'aide d'au moins un bloc élargi, de façon que la deuxième passe détermine la valeur d'au moins un des points non-prédits.

Par exemple, si lors d'une première passe au moins un point de la première image prédite est non-prédit, on obtient une zone noire sur la première image prédite. Cette zone est détectée par une information révélatrice de la présence de point non-prédits (ou de l'absence de prédiction). On détermine alors, dans l'image de référence, au moins un bloc élargi au voisinage du point correspondant à ce point non-prédit dans l'image prédite. En d'autres termes, le bloc correspondant au bloc élargi dans l'image prédite contient ce point non-prédit.

Selon un mode de réalisation particulier, l'information de déplacement, représentative d'un déplacement entre ledit bloc de référence et un bloc correspondant dans l'image à prédire comprend un ensemble de vecteurs contrôle, représentatifs chacun d'un déplacement entre un point caractéristique dudit bloc de référence ou d'un sous-bloc dudit bloc de référence, et une position correspondante dudit point caractéristique dans l'image à prédire.

Par exemple, les vecteurs de contrôle pour le bloc ou sous-bloc sont associés chacun à un des sommets du bloc ou sous-bloc. Ainsi, pour une image en deux dimensions, quatre vecteurs de contrôle sont associés au bloc, un vecteur de contrôle étant associé à chaque sommet ou coin du bloc. Pour une image en trois dimensions, huit vecteurs sont associés au bloc, qui correspond en fait à un cube, un vecteur de contrôle étant associé à chaque coin du bloc. Il est également possible d'associer ces vecteurs de contrôle à d'autres points du bloc, correspondant par exemple à un contour. De la même façon, le nombre de vecteurs de contrôle associé à un bloc n'est pas figé.

Ainsi lors de la mise en oeuvre de la prédiction par compensation en mouvement en avant, les vecteurs de contrôle pointent d'une ou plusieurs images de référence vers l'image à prédire. On détermine alors une pluralité de vecteurs de contrôle pour un bloc donné appartenant à une image de référence.

Selon un aspect particulier de l'invention, le bloc élargi est déterminé en mettant en oeuvre une technique appartenant au groupe comprenant :

- un déplacement de toutes les arêtes du bloc de référence d'une même distance ;
- un déplacement d'au moins une arête du bloc de référence.

Par exemple, on peut élargir un bloc de façon régulière, c'est-à-dire que chaque bord du bloc de référence est identiquement déplacé.

Selon une variante, on peut adapter l'élargissement du bloc de référence selon une direction particulière, par exemple vers le haut, vers la droite ou même combiner vers le haut et vers le bas ce qui revient au déplacement de deux arêtes.

L'application de l'élargissement peut être systématique et/ou appliquée dans le cas d'une détection positive de zone découverte.

Par exemple si un point non-prédit (correspondant à une zone découverte) est situé « au-dessus » du bloc considéré, le bloc élargi est déterminé en déplaçant au moins une arête du bloc de référence vers le haut, c'est-à-dire que l'élargissement du bloc vise à englober le point non-prédit. Ainsi la largeur de l'élargissement peut s'adapter à la distance aux zones découvertes au voisinage du bloc considéré. Finalement, en l'absence de zone découverte au voisinage du bloc considéré, aucun élargissement n'est appliqué et on passe à un autre bloc.

Selon un aspect particulier de l'invention, le déplacement d'au moins une arête tient compte d'au moins un des vecteurs de contrôle. Par exemple, une prédiction qui utilise une information de déplacement représentative d'un déplacement entre le bloc de référence et un bloc correspondant, ce déplacement étant caractérisé vers le haut et à gauche, associera un bloc élargi vers le haut et la gauche. Ainsi l'élargissement du bloc s'adapte au déplacement considéré entre le bloc de référence et un bloc correspondant dans l'image à prédire.

De plus, selon un aspect particulier de l'invention, lorsque au moins deux valeurs de prédiction sont déterminées pour un même point de l'image à prédire, ledit procédé comprend une étape de prédiction dudit point tenant compte de valeurs de confiance affectées chacune auxdites valeurs de prédiction.

Un autre aspect de l'invention concerne un procédé de codage qui met en oeuvre le procédé de prédiction décrit précédemment pour au moins un bloc d'une image de référence.

Plus précisément, la prédiction d'une image courante délivre une image prédite. De manière optionnelle, l'opération de prédiction est suivie des étapes suivantes :

- détermination d'au moins un résidu de prédiction, par comparaison de l'image courante et de l'image prédite ;
- codage du résidu de prédiction ;
- transmission et/ou stockage d'un signal comprenant le résidu de prédiction issu de l'étape de codage.

Selon un aspect particulier de l'invention, le procédé de codage met en oeuvre une étape d'insertion dans ledit signal d'une information représentative de l'utilisation d'au moins un bloc élargi et/ou de l'élargissement affecté au bloc élargi pour un bloc de référence donné.

Ainsi cette information peut par exemple prendre la forme d'un bit de signalisation, dont la valeur « 1 » signale l'élargissement du bloc considéré et « 0 » l'inverse et/ou d'un octet indiquant le type d'élargissement effectué.

En outre, de manière optionnelle, le signal comprend le ou les résidus de prédiction obtenus par comparaison de l'image courante et de l'image prédite.

Dans un autre mode de réalisation, l'invention concerne un dispositif de codage d'une séquence d'images, mettant en oeuvre une prédiction par compensation en mouvement en avant à partir d'au moins une image de référence, et qui comprend, pour au moins un bloc d'une image de référence, dit bloc de référence :

- des moyens de détermination d'au moins une information de déplacement représentative d'un déplacement entre le bloc de référence et un bloc correspondant dans une image courante ;
- des moyens de détermination d'au moins un bloc élargi, comprenant le bloc de référence et au moins un point d'un bloc adjacent au bloc de référence dans l'image de référence ;
- des moyens de détermination d'une valeur de prédiction pour au moins un point de l'image courante, à partir du au moins un bloc élargi et de la ou des informations de déplacement déterminée(s) pour le bloc de référence, délivrant une image prédite.

Selon une variante, un tel dispositif comprend également :

- des moyens de détermination d'au moins un résidu de prédiction, par comparaison de l'image courante et de l'image prédite ;
- des moyens de codage du au moins un résidu de prédiction ;
- des moyens de transmission et/ou stockage d'un signal comprenant le ou les résidus de prédiction issus des moyens de codage.

Un tel dispositif de codage est notamment adapté à mettre en oeuvre le procédé de codage décrit précédemment. Il s'agit par exemple d'un codeur vidéo de type MPEG ou H.264 ou selon une future norme de compression vidéo (H.265 ou ISO-MPEG).

Un autre aspect de l'invention concerne un signal représentatif d'une séquence d'images codées selon le procédé de codage décrit précédemment. Ce signal comprend une information représentative de l'utilisation d'au moins un bloc élargi et/ou de l'élargissement affecté au bloc élargi pour un bloc de référence donné.

Ce signal pourra bien sûr comporter les différentes caractéristiques relatives au procédé de codage selon l'invention.

En particulier, ce signal peut porter le ou lesdits résidus de prédiction issus de l'étape de codage. Selon une variante de l'invention, un tel signal comprend également au moins une information de reconstruction des vecteurs de contrôle pour le bloc donné.

Encore un autre aspect de l'invention concerne un support d'enregistrement portant un signal tel que décrit précédemment.

Dans un autre mode de réalisation, l'invention concerne un procédé de décodage d'un signal représentatif d'une séquence d'images, comprenant une étape de reconstruction d'au moins une image de la séquence, à partir d'une prédiction de l'image à reconstruire, ladite prédiction associant un bloc de l'image à reconstruire à au moins un bloc correspondant dans une image de référence de la séquence.

Un tel procédé de décodage met en oeuvre la prédiction d'au moins une image de ladite séquence, mettant en oeuvre le procédé de prédiction décrit précédemment, délivrant une image prédite.

Selon une variante, un tel procédé met également en oeuvre les étapes suivantes :

- décodage d'au moins un résidu de prédiction ;
- ajout du résidu dans l'image prédite, délivrant une image reconstruite.

Un tel procédé est notamment adapté à décoder une séquence d'images codée selon le procédé de codage précédemment décrit.

On effectue de cette façon les mêmes étapes de prédiction qu'au codage, de façon à reconstruire le bloc donné et de manière optionnelle en ajoutant le résidu de prédiction (transmis dans le signal), à la prédiction.

En particulier, il est possible d'extraire du signal, au cours du décodage, au moins une information de reconstruction des vecteurs de contrôle pour un bloc donné, ou des tubes de mouvement, afin de traiter des informations de transition de ces tubes, et de reconstruire pour chaque tube un bloc courant, potentiellement déformé, dans l'image que l'on cherche à reconstruire.

Selon un aspect de l'invention, un tel procédé de décodage met en oeuvre une étape d'extraction d'une information représentative de l'utilisation d'au moins un bloc élargi et/ou de l'élargissement affecté au bloc élargi, pour un bloc de référence donné, et l'étape de prédiction prend en compte cette information.

Dans un autre mode de réalisation, l'invention concerne un dispositif de décodage d'un signal représentatif d'une séquence d'images, mettant en oeuvre une prédiction par compensation en mouvement en avant à partir d'au moins une image de référence.

Pour au moins un bloc d'une image de référence, dit bloc de référence, ce dispositif comprend :

- des moyens de détermination d'au moins une information de déplacement représentative d'un déplacement entre ledit bloc de référence et un bloc correspondant dans une image à prédire ;
- des moyens de détermination d'au moins un bloc élargi, comprenant ledit bloc de référence et au moins un point d'un bloc adjacent audit bloc de référence dans ladite image de référence ;
- des moyens de détermination d'une valeur de prédiction pour au moins un point de l'image à prédire, à partir dudit au moins un bloc élargi et de la ou desdites informations de déplacement déterminée(s) pour ledit bloc de référence, délivrant une image prédite.

Selon une variante, un tel dispositif comprend également :

- des moyens de décodage d'au moins un résidu de prédiction ; et
- des moyens d'ajout dudit au moins résidu dans l'image prédite, délivrant une image reconstruite.

Un tel dispositif de décodage est notamment adapté à mettre en oeuvre le procédé de décodage décrit précédemment. Il s'agit par exemple d'un décodeur de type MPEG ou H.264 ou selon une future norme de compression vidéo (H.265 ou ISO-MPEG).

L'invention concerne également un ou plusieurs programmes d'ordinateur comportant des instructions pour la mise en oeuvre d'un procédé de prédiction et/ou d'un procédé de codage et/ou d'un procédé de décodage respectivement, tels que décrits précédemment. Par exemple, de tels programmes sont téléchargeables depuis un réseau de communication et/ou stockés sur un support lisible par ordinateur et/ou exécutables par un processeur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les **figures 1A et 1B** déjà commentées en relation avec l'art antérieur illustrent les techniques de compensation en mouvement par projection en arrière et en avant respectivement ;
- les **figures 2A et 2B** présentent les principales étapes de la prédiction par compensation en mouvement en avant selon un mode de réalisation de l'invention ;
- les **figures 3A et 3B** illustrent la projection d'un bloc selon un mode de réalisation de l'invention ;
- les **figures 4A à 4C** illustrent des exemples de détermination d'un bloc élargi ;
- la **figure 5** présente la structure d'un signal selon un mode de réalisation particulier de l'invention ;
- la **figure 6** présente les principales étapes du procédé de décodage selon un mode de réalisation de l'invention ;
- les **figures 7 et 8** présentent la structure d'un dispositif de codage et d'un dispositif de décodage selon un mode de réalisation particulier de l'invention.

## 5. Description d'un mode de réalisation de l'invention

### 5.1 Principe général

Le principe général de l'invention repose sur une prédiction par compensation en mouvement en avant, exploitant une prédiction spatio-temporelle à faible complexité.

Plus précisément, l'invention propose de déterminer une prédiction d'une image courante à partir d'un bloc élargi d'une image de référence, c'est-à-dire un bloc de l'image de référence comprenant un bloc de référence et au moins un pixel d'un bloc adjacent au bloc de référence dans l'image de référence.

On rappelle que, classiquement, l'utilisation de déplacements différents sur des blocs projetés en avant engendrait des zones de découvrement entre les blocs. La technique proposée selon l'invention permet d'obtenir une image prédite dépourvue de zones découvertes, ou à tout le moins, comprenant un nombre de points non-prédits inférieur aux techniques de l'art antérieur.

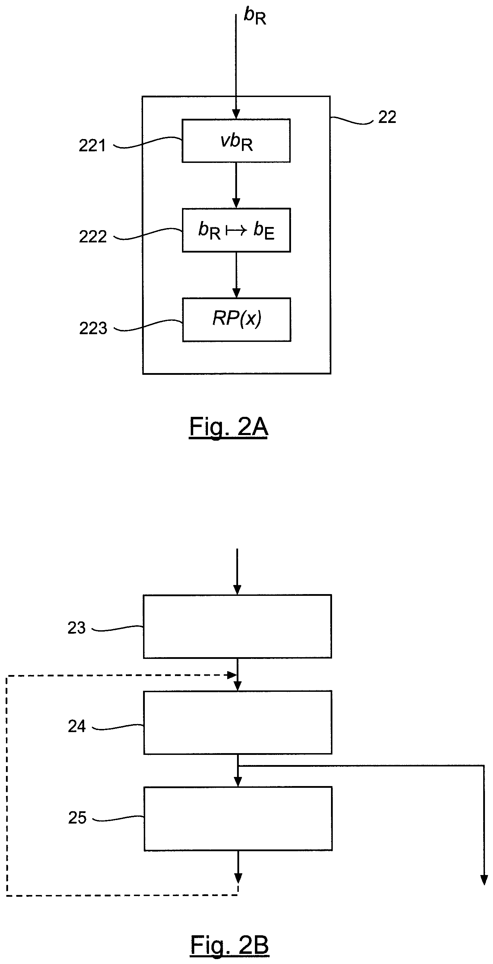

On décrit ci-après, en relation avec la figure 2A, les principales étapes mises en oeuvre, de manière générale, pour la prédiction par compensation en mouvement en avant selon un mode de réalisation de l'invention.

Comme illustré en figure 2A, la prédiction (22) par compensation en mouvement en avant effectuée à partir d'au moins une image de référence, et pour au moins un bloc de cette image de référence dit bloc de référence $b_R$, comprend les étapes suivantes :

- détermination 221 d'au moins une information de déplacement $vb_R$ pour le bloc $b_R$, représentative d'un déplacement entre le bloc de référence et un bloc correspondant dans l'image à prédire ;
- détermination 222 d'au moins un bloc élargi $b_E$, comprenant le bloc de référence et au moins un point d'un bloc adjacent au bloc de référence dans l'image de référence ;
- détermination 223 d'une valeur de prédiction $RP(x)$ pour au moins un point de l'image à prédire, à partir du au moins un bloc élargi et de la ou des informations de déplacement déterminée(s) pour le bloc de référence.

Plus précisément, la figure 2B illustre un mode de réalisation de l'invention dans lequel le procédé de prédiction met en oeuvre :

- une première passe de prédiction (23) à l'aide d'au moins un bloc de référence, délivrant une première image prédite ;
- une étape de détection (24) d'au moins un point non-prédit dans la première image prédite ;
- et, en cas de détection positive (25), une deuxième passe de prédiction à l'aide d'au moins un bloc élargi, de façon que la deuxième passe détermine la valeur d'au moins un des points non-prédits.

Le procédé selon l'invention peut être mis en oeuvre de diverses manières, notamment sous forme câblée ou sous forme logicielle.

*5.2 Description détaillée d'un mode de réalisation du procédé de prédiction*

On présente ci-après un mode de réalisation particulier du procédé de prédiction selon l'invention.

*A) Découpage en bloc d'une image de référence*

On considère une image de référence *Ir,* découpée en un ensemble de blocs comprenant chacun au moins deux pixels.

Un bloc peut être de forme arbitraire, par exemple de taille carré ou rectangulaire. La taille des blocs peut être variable, par exemple de taille 4x4, 8x8, 16x4, 16x16... Les blocs de l'image de référence peuvent être de taille différente. L'ensemble des blocs peut recouvrir totalement ou non l'image de référence et les blocs peuvent se recouvrir ou non.

Par souci de simplification, on considère ici (de manière non limitative), un ensemble de blocs carrés, de taille fixe, ne se chevauchant pas, et recouvrant toute l'image de référence.

*B) Projection en avant des blocs de l'image de référence*

Au cours d'une première passe de prédiction, on parcourt les blocs de l'image de référence *Ir* et, pour chaque bloc, on réalise une projection en avant dans une image à prédire *Ic.*

Pour y parvenir, on détermine auparavant une information représentative du mouvement entre un bloc de l'image de référence, dit bloc de référence, et un bloc correspondant dans l'image à prédire.

Bien entendu, cette projection en avant peut se faire à l'aide de différents modèles de mouvement, et par exemple une translation, une déformation affine...

On considère par exemple que le modèle de mouvement est défini par un ensemble de vecteurs de contrôle, tels que décrits dans la demande de brevet français n°0854465 déposée le 1er juillet 2008 au nom du même Demandeur.

L'information de déplacement, représentative d'un déplacement entre le bloc de référence et un bloc correspondant dans l'image à prédire comprend alors un ensemble de vecteurs contrôle, représentatifs chacun d'un déplacement entre un point caractéristique du bloc de référence ou d'un sous-bloc du bloc de référence, et une position correspondante du point caractéristique dans l'image à prédire.

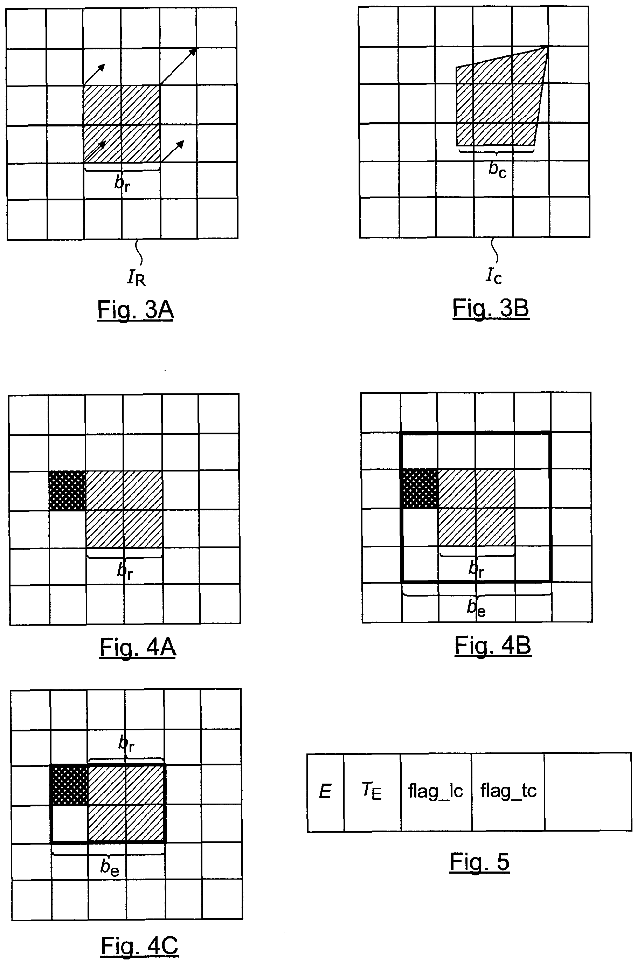

Par exemple, la figure 3A considère un ensemble de vecteurs contrôle représentés par des flèches pour un bloc de référence $b_R$ considéré (bloc hachuré, comprenant quatre sous-blocs). Ces vecteurs de contrôle définissent un mouvement vers le haut à droite.

La projection en avant met en oeuvre différentes étapes. On note P = *Ir* l'image de référence à compenser en avant, RI l'image intermédiaire qui correspond à une image d'accumulation pondérée des valeurs de prédiction, *RW* l'image d'accumulation pondérée des facteurs de pondération utilisés.

Tout d'abord on procède à l'initialisation de l'image courante que l'on cherche à prédire. Ainsi pour tout pixel *x* de l'image, on a *RI(x)* = 0, *RW(x)* = 0 .

Puis, pour tout bloc (ou sous bloc) de référence considéré, on associe le modèle de mouvement considéré, ici l'ensemble de vecteurs contrôle. Ainsi, pour tout pixel x du bloc (ou sous-bloc) considéré, on effectue la mise à jour de l'image reconstruite comme indiqué par les équations suivantes :

$$RI(x) = \sum_i w_i(x) P(x + v_i)$$

$$RW(x) = \sum_i w_i(x)$$

où : les vecteurs $v_i$ correspondent aux i vecteurs contrôle, les valeurs $w_i$ correspondent aux poids de pondérations entre les différentes prédictions obtenues par les différents vecteurs contrôle.

Les poids de pondérations $w_i$ sont en général dépendants de la position du point x considéré dans le bloc.

Par exemple, considérant le bloc $b_r$ de la figure 3A, on obtient alors schématiquement par projection, le bloc $b_c$ de l'image *Ic,* représenté sur la figure 3B (bloc hachuré) projeté selon les vecteurs contrôle représentant un mouvement vers le haut à droite.

Une fois tous les blocs de l'image parcourus, on effectue une étape de normalisation de l'image pour tout pixel x de l'image, telle que :

$$RP(x) = \frac{RI(x)}{RW(x)}$$

On considère que l'image prédite, notée RP, est complètement reconstruite si, pour tout point x de l'image, RW(x) # 0 .

Les poids de pondération utilisés peuvent être adaptés pour réaliser une prédiction plus lisse. Par exemple, on peut notamment considérer :

- $w_i(x)$ = 1 pour une contribution uniforme de chaque prédiction ;
- $w_i(x)$ = $f(d(x,b))$ où $f$ est une fonction décroissante de la distance $d(x,b)$ du point non-prédit x à un point représentatif du bloc $b$ considéré. Ce point représentatif du bloc *b* considéré peut par exemple être localisé au centre de ce bloc, au milieu d'une arête de ce bloc, ou à l'un de ses sommets. On obtient ainsi, une mesure de prédiction liée à la proximité du bloc propageant sa prédiction.

Bien entendu, d'autres techniques de compensation en mouvement en avant peuvent être utilisées pour cette première passe, et notamment une technique de compensation en mouvement classique, telle que décrite en relation avec l'art antérieur.

*C) Identifications des zones découvertes*

La projection de chaque bloc peut utiliser des mouvements différents, ce qui entraîne des zones de découvrement (notées D en référence à la figure 1B). En d'autres termes, ces zones correspondant à des zones non reconstruites lors de la première passe de prédiction (notée 23 en relation avec la figure 2B). Par exemple, ces zones peuvent prendre la forme de zones noires à l'issue de la première passe de prédiction.

Ces zones peuvent être identifiées, par une étape de détection (notée 24 en relation avec la figure 2B), en utilisant par exemple l'image RW d'accumulation des facteurs de pondérations définie lors de la première passe de prédiction. Ainsi l'ensemble des zones découvertes correspond à l'ensemble des points où l'on a $RW(x) = 0$.

Si aucune zone découverte n'est identifiée, alors l'image est complètement reconstruite (ou prédite), et on peut procéder au codage des résidus.

Dans le cas d'une détection positive de zone découverte, c'est-à-dire d'au moins un point non-prédit, on procède à une deuxième passe de prédiction 25 utilisant au moins un bloc élargi.

*D) Projections en avant de blocs élargis*

Au cours de cette deuxième passe de prédiction 25, selon ce mode de réalisation, on parcourt les blocs de l'image de référence, et on projette en avant dans une image intermédiaire des informations de texture d'une version élargie d'un bloc de référence considéré. Les blocs ou sous-blocs utilisés lors de la première passe 23 sont repris.

Tout d'abord, on initialise l'image à reconstruire, c'est-à-dire que pour tout *x* de l'image, on pose $RI2(x) = 0$, $RW2(x) = 0$, où $RI2$ et RW2 représentent respectivement l'image intermédiaire d'accumulation pondérée des valeurs de prédiction et l'image intermédiaire d'accumulation des facteurs de pondérations utilisés lors de cette deuxième passe 25.

Puis pour chaque bloc de référence considéré, on définit l'élargissement de ce bloc. Par exemple, au vu du mode de réalisation considéré mettant en oeuvre un ensemble de vecteurs de contrôle pour chaque bloc, on peut considérer un élargissement en fonction de ces vecteurs contrôle.

Ainsi, comme défini précédemment on considère l'ensemble de vecteurs contrôle représenté par des flèches pour le bloc $b_r$ de référence de l'image de référence $I_r$.

Par exemple, si le bloc de référence considéré $b_r$ et le bloc situé au-dessus présentent une arête commune à la fois dans l'image de référence et dans l'image prédite après compensation en mouvement, alors cela signifie que les deux blocs sont connectés verticalement. Dans ce cas, le bloc $b_r$ n'est pas élargi vers le haut. Dans le cas contraire, le bloc est élargi en élargissant vers le haut le bloc de référence $b_r$.

Si le bloc de référence considéré $b_r$ et le bloc situé à sa gauche présentent une arête commune à la fois dans l'image prédite et dans l'image de référence après compensation en mouvement, alors cela signifie que les deux blocs sont connectés horizontalement. Par conséquent, le bloc n'est pas élargi vers la gauche. Dans le cas contraire, le bloc est élargi en élargissant vers la gauche le bloc de référence $b_r$.

Si le bloc de référence considéré $b_r$ et le bloc situé à sa droite présentent une arête commune à la fois dans l'image prédite et dans l'image de référence après compensation en mouvement, alors cela signifie que les deux blocs sont connectés horizontalement. Par conséquent, le bloc n'est pas élargi vers la droite. Dans le cas contraire, le bloc est élargi en élargissant vers la droite le bloc de référence $b_r$.

Si le bloc de référence considéré $b_r$ et le bloc situé en-dessous présentent une arête commune à la fois dans l'image prédite et dans l'image de référence après compensation en mouvement, alors cela signifie que les deux blocs sont connectés verticalement. Par conséquent, le bloc n'est pas élargi vers le bas. Dans le cas contraire, le bloc est élargi en élargissant vers le bas le bloc de référence $b_r$.

On effectue ensuite la projection du bloc élargi.

On note que les paramètres de mouvement sur le bloc élargi peuvent être différents de ceux du bloc de référence original. Par exemple, dans le cas d'un mouvement bilinéaire défini par un ensemble de vecteurs de contrôle, avec un vecteur de contrôle à chaque coin d'un bloc de référence, les valeurs des vecteurs mouvement aux coins du bloc élargi peuvent être différentes, afin que le champ de mouvement interpolé à l'intérieur du bloc élargi soit cohérent avec celui obtenu sur le bloc de référence.

Ainsi, pour tout pixel x du bloc (ou sous-bloc) considéré, on effectue la mise à jour de l'image reconstruite à partir de blocs élargis:

$$RI2(x) = \sum w_i(x)P(x + v_i)$$

$$RW2(x) = \sum_i w_i(x)$$

Une fois tous les blocs de l'image parcourus, on effectue une étape de normalisation de l'image pour tout pixel x de l'image.

Comme indiqué précédemment, les poids de pondération utilisés peuvent être adaptés pour réaliser une prédiction plus lisse.

*E) Définition des valeurs de prédiction dans les zones de découvrement*

Il est alors possible de reporter les nouvelles valeurs obtenues dans les zones non reconstruites lors de la première passe de prédiction.

Ainsi, pour tout point x de l'image à reconstruire tel que $RW(x)=0$, on définit la valeur reconstruite par $RI(x) = RI2(x) / RW2(x)$.

Dans le cas où $RW2(x)$ est nul, la valeur $RI(x)$ reste indéfinie.

En d'autres termes, on considère que la nouvelle image prédite RP2 est complètement reconstruite si pour tout x de l'image $RW\,2(x) \neq 0$.

Il est alors possible de mettre en oeuvre une technique classique de compensation en mouvement en arrière, ou d'utiliser de nouveaux tubes, grâce aux nouvelles valeurs obtenues lors de cette deuxième passe de prédiction.

Il est également possible d'appliquer une nouvelle étape 24 de détection de zone découverte dans l'image RP2, afin de déterminer s'il reste des zones découvertes dans l'image prédite RP2.

Dans le cas d'une détermination positive, l'étape 25 (ou toute autre technique d'*"inpainting"*) est de nouveau mise en oeuvre, au moyen de nouveaux blocs élargis, tenant compte des points reconstruits dans l'image RP2 par exemple.

Ainsi, dans un mode de réalisation particulier les étapes 24 et 25 peuvent être mises en oeuvre de manière itérative.

*5.3 Détermination des blocs élargis*

Plusieurs options se présentent pour déterminer le bloc élargi. On présente quelques exemples ci-après, en relation avec les figures 4A, 4B, et 4C.

Plus précisément, la figure 4A représente une portion d'une image de référence *Ir,* et un bloc de référence $b_R$ (bloc hachuré) de taille 2x2 pixels.

On représente également, sur cette même figure, un point correspondant à un point non-prédit identifié dans l'image à prédire ($RW(x)=0$, pixel quadrillé situé à gauche du bloc de référence) détecté lors de l'étape de détection 24. En effet, on rappelle que les points des zones découvertes sont identifiés dans l'image à prédire. Par la suite, pour un tel point dans l'image à prédire, on peut considérer le point dans l'image de référence correspondant à ce point non-prédit en lui appliquant le mouvement en arrière d'un bloc voisin considéré. Plusieurs blocs voisins peuvent être considérés dans cette opération, amenant à l'identification de plusieurs points dans l'image de référence.

Par souci de simplification, on ne considère par la suite que le cas d'une association à un seul bloc voisin. Dans le cas d'association à plusieurs blocs voisins, la même opération est effectuée pour chacun des blocs voisins considérés.

La figure 4B représente un premier exemple de bloc élargi $b_E$ (encadré en gras noir), de taille 3x3, mettant en oeuvre un déplacement identique de toutes les arêtes du bloc de référence $b_R$ (ici représentation 2D). De cette façon, le point non-prédit se trouve compris dans le bloc élargi.

Ainsi lors de la deuxième passe de prédiction 25, le pixel non-prédit sera reconstruit par projection en avant du bloc élargi.

La figure 4C représente un deuxième exemple de bloc élargi $b_E$ (encadré engras), de taille 3x2, mettant en oeuvre un déplacement d'une seule arête, l'arête gauche. De nouveau, l'élargissement est défini de façon à inclure le point non-prédit identifié dans le bloc élargi.

Le bloc élargi de la figure 4C est plus petit que celui de la figure 4B, ce qui permet d'accélérer la deuxième passe de prédiction 25.

Cependant l'utilisation du bloc élargi de la figure 4B peut permettre la reconstruction de points non-prédits supplémentaires.

La définition de l'élargissement peut être mise en oeuvre de manière systématique, c'est-à-dire que tous les blocs sont élargis de la même façon, ou un élargissement adaptatif qui consiste à adapter la largeur de l'élargissement en fonction de la présence ou l'absence de zone découverte, ou bien encore du type du vecteur contrôle représentant le mouvement du bloc considéré (mouvement vers le haut et vers la droite, mouvement vers le bas et vers la gauche, mouvement vers la gauche...). Par exemple, si dans le voisinage du bloc considéré il n'y a pas de zone découverte, le bloc n'est pas élargi.

On note que selon la technique proposée le voisinage considéré, dans la zone de découvrement, n'occupe pas une position prédéfinie (par exemple un voisinage anti-causal, la zone anti-causale étant la zone de l'image comprenant les blocs situés après le bloc courant, selon un sens de parcours prédéterminé des blocs dans l'image.

De plus, dans une zone à reconstruire, pour un même pixel, plusieurs valeurs peuvent être combinées (avec pondération de chacune des valeurs) pour définir la valeur du pixel courant.

Par ailleurs, il n'y a pas de recherche du meilleur candidat effectuée, le candidat étant défini automatiquement.

La technique proposée permet donc d'avoir des restaurations plus homogènes, ne privilégiant pas une propagation de texture dans un sens prédéterminé.

## 5.4 Codage

La technique de prédiction décrite peut être utilisée par un codeur vidéo.

Selon un mode de réalisation particulier, un tel codeur met en oeuvre les étapes suivantes, pour une image courante d'une séquence d'images :

- prédiction de l'image courante, mettant en oeuvre le procédé de prédiction décrit précédemment, délivrant une image prédite ;
- détermination d'au moins un résidu de prédiction, par comparaison de l'image courante et de l'image prédite ;
- codage dudit au moins un résidu de prédiction ;
- transmission et/ou stockage d'un signal comprenant le ou les résidus de prédiction issus de l'étape de codage.

## 5.5 Signal

Une fois codées, les images de la séquence sont transmises à un décodeur.

On présente, en relation avec la figure 5, selon un mode de réalisation, pour un bloc de l'image à reconstruire, la syntaxe associée à un signal portant une information représentative de l'utilisation d'au moins un bloc élargi et/ou de l'élargissement affecté au bloc élargi pour un bloc de référence donné.

Dans le contexte où le codeur et le décodeur mettent en oeuvre un même mécanisme de détection des zones découvertes, il est possible de laisser le codeur et le décodeur identifier les blocs à élargir. Dans ce cas, on spécifie une syntaxe de codage/décodage au niveau de l'entête d'une tranche (chaque image pouvant être découpée en tranches (en anglais « slice »)), ou de la séquence d'images, indiquant qu'il faut que le décodeur utilise des blocs élargis, ainsi que le mécanisme d'identification de ces élargissements. Ce mécanisme d'identification peut également être défini par le standard de représentation utilisé.

Cette information peut par exemple prendre la forme d'un bit E de signalisation, dont la valeur « 1 » signale l'élargissement du bloc considéré et « 0 » l'inverse et/ou d'un octet $T_E$ indiquant le type d'élargissement effectué.

Selon le mode de réalisation représenté, on insère de plus dans ce signal des informations de reconstruction des vecteurs de contrôle associés au mouvement du bloc de référence $b_R$ considéré. Par exemple, ces informations de reconstruction comprennent les indicateurs flag_lc et flag_tc comme décrit dans la demande de brevet français n°0854465 déposée le 1er juillet 2008 précitée.

Selon le mode de réalisation, on insère également, de manière optionnelle (non représentée ici), le ou les résidus de prédiction obtenus par comparaison de l'image courante et de l'image prédite.

## 5.6 Décodage

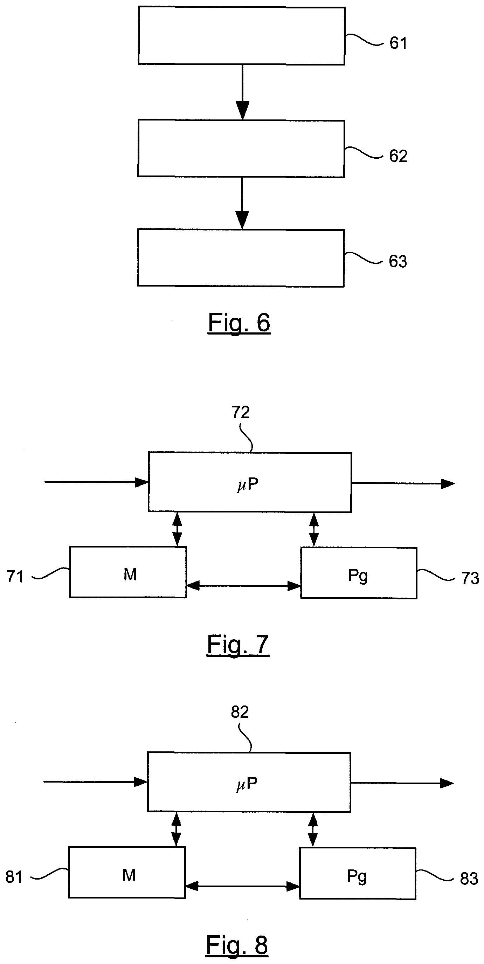

On présente désormais en relation avec la figure 6 les principales étapes de décodage, mises en oeuvre dans un décodeur vidéo.

On suppose que le décodeur reçoit un signal représentatif d'une séquence d'images, codée par exemple selon le procédé de codage décrit précédemment.

De manière générale, le signal reçu ne comporte pas de résidu de prédiction. La figure 6 représente un procédé de décodage dans lequel le signal comporte de manière optionnelle au moins un résidu de prédiction.

Ainsi, selon ce mode de réalisation, le procédé de décodage selon l'invention comprend une étape 61 de décodage d'au moins un résidu de prédiction. Une étape de prédiction 62, selon le procédé de prédiction décrit précédemment, succède à l'étape de décodage 61. Enfin, une étape 63 est mise en oeuvre afin d'ajouter le ou les résidus décodés dans l'image prédite.

Un tel procédé peut être mis en oeuvre de diverses manières, notamment sous forme câblée ou sous forme logicielle.

## 5.7 Structures du codeur et du décodeur

On présente finalement, en relation avec les figures 7 et 8, les structures simplifiées d'un dispositif de codage et d'un dispositif de décodage mettant respectivement en oeuvre une technique de codage et une technique de décodage telles que décrites ci-dessus.

Un dispositif de codage tel qu'illustré en figure 7 comprend une mémoire 71 comprenant une mémoire tampon, une unité de traitement 72, équipée par exemple d'un microprocesseur μP, et pilotée par le programme d'ordinateur 73, mettant en oeuvre le procédé de codage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée au moins une image à coder ou un bloc d'une image à coder. Le microprocesseur de l'unité de traitement 72 met en oeuvre les étapes du procédé de codage décrit précédemment, selon les instructions du programme d'ordinateur 73, pour déterminer une prédiction de l'image ou du bloc à coder, et coder le bloc ou l'image correspondante. Pour cela, le dispositif de codage comprend, outre la mémoire tampon 71, au moins des moyens de détermination d'au moins une information de déplacement représentative d'un déplacement entre un bloc de référence et un bloc correspondant dans une image courante, des moyens de détermination d'au moins un bloc élargi, des moyens de détermination d'une valeur de prédiction pour au moins un point de l'image courante, à partir du ou des bloc(s) élargi(s) et de la ou des informations de déplacement déterminée(s) pour le bloc de référence, délivrant une image prédite. Ces moyens sont pilotés par le microprocesseur de l'unité de traitement 72.

Un dispositif de décodage tel qu'illustré en figure 8 comprend une mémoire 81 comprenant une mémoire tampon, une unité de traitement 82, équipée par exemple d'un microprocesseur μP, et pilotée par le programme d'ordinateur 83, mettant en oeuvre le procédé de décodage selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal représentatif d'une séquence d'images comprenant des informations représentatives de l'utilisation d'au moins un bloc élargi et/ou de l'élargissement affecté au bloc élargi pour un bloc de référence donné. Le microprocesseur de l'unité de traitement 82 met en oeuvre les étapes du procédé de décodage décrit précédemment, selon les instructions du programme d'ordinateur 83, pour déterminer une prédiction du bloc donné, et reconstruire l'image correspondante. Pour cela, le dispositif de décodage comprend, outre la mémoire tampon 81, au moins des moyens de détermination d'au moins une information de déplacement représentative d'un déplacement entre un bloc de référence et un bloc correspondant dans une image courante, des moyens de détermination d'au moins un bloc élargi, des moyens de détermination d'une valeur de prédiction pour au moins un point de l'image courante, à partir du ou des bloc(s) élargi(s) et de la ou desd informations de déplacement déterminée(s) pour le bloc de référence, délivrant une image prédite. Ces moyens sont pilotés par le microprocesseur de l'unité de traitement 82.

**Revendications**

1. Procédé de prédiction (22) d'une image à prédire, par compensation de mouvement avant à partir d'au moins une image de référence, l'image de référence étant découpée en un ensemble de blocs ne se chevauchant pas et recouvrant toute l'image de référence, la compensation de mouvement avant utilisant des vecteurs de déplacement pointant de l'image de référence vers l'image à prédire, engendrant des zones découvertes dans l'image à prédire, ledit procédé comprend les étapes suivantes:

   - pour chaque bloc de l'image de référence, détermination (221) d'au moins un vecteur de déplacement, représentatif d'un déplacement entre ledit bloc de l'image de référence et un bloc correspondant dans l'image à prédire ;

   ledit procédé est **caractérisé en ce qu'**il comprend les étapes suivantes, pour au moins un bloc de l'image de référence, dit bloc de référence, pour lequel un bloc compensé en mouvement avant dans l'image à prédire à l'aide du au moins un vecteur de déplacement du bloc de référence correspond à un bloc voisin d'une zone découverte de l'image à prédire:

   - détermination (222) d'au moins un bloc élargi, comprenant ledit bloc de référence et au moins un point d'un bloc adjacent audit bloc de référence dans ladite image de référence ;
   - détermination (223) d'une valeur de prédiction pour au moins un point de ladite zone découverte de l'image à prédire, par compensation de mouvement avant dudit au moins un bloc élargi en utilisant le ou lesdits vecteurs de déplacement déterminé(s) pour ledit bloc de référence.

2. Procédé de prédiction selon la revendication 1, **caractérisé en ce qu'**il met en oeuvre :

   - une première passe de prédiction (23) à l'aide d'au moins un bloc de référence, délivrant une première image prédite ;
   - une étape de détection (24) d'au moins un point non-prédit dans ladite première image prédite ;
   - et, en cas de détection positive (25), une deuxième passe de prédiction à l'aide d'au moins un bloc élargi, de façon que ladite deuxième passe détermine la valeur d'au moins un desdits points non-prédits.

3. Procédé de prédiction selon la revendication 1, **caractérisé en ce que** ledit bloc élargi est déterminé en mettant en oeuvre une technique appartenant au groupe comprenant :

   - un déplacement de toutes les arêtes dudit bloc de référence d'une même distance ;
   - un déplacement d'au moins une arête dudit bloc de référence.

4. Procédé de prédiction selon la revendication 1, **caractérisé en ce que**, au moins deux valeurs de prédiction étant déterminées pour un même point de l'image à prédire, ledit procédé comprend une étape de prédiction dudit point tenant compte de valeurs de confiance affectées chacune auxdites valeurs de prédiction.

5. Procédé de codage d'une séquence d'images, **caractérisé en ce qu'**il met en oeuvre, pour une image courante de ladite séquence, le procédé de prédiction selon la revendication 1, délivrant une image prédite.

6. Procédé de codage selon la revendication 5, **caractérisé en ce qu'**il met en oeuvre une étape d'insertion, dans un signal représentatif de ladite séquence d'images, d'une information représentative de l'utilisation d'au moins un bloc élargi et/ou de l'élargissement affecté au bloc élargi pour un bloc de référence donné.

**7.** Dispositif de codage d'une séquence d'images, mettant en oeuvre une prédiction par compensation de mouvement avant à partir d'au moins une image de référence, l'image de référence étant découpée en un ensemble de blocs ne se chevauchant pas et recouvrant toute l'image de référence, la compensation de mouvement avant utilisant des vecteurs de déplacement pointant de l'image de référence vers une image à prédire, engendrant des zones découvertes dans l'image à prédire,
le dispositif comprend:

- des moyens de détermination, pour chaque bloc de l'image de référence, d'au moins un vecteur de déplacement représentatif d'un déplacement entre ledit bloc de l'image de référence et un bloc correspondant dans l'image à prédire ;

le dispositif est **caractérisé en ce que**, pour au moins un bloc de l'image de référence, dit bloc de référence, pour lequel un bloc compensé en mouvement avant dans l'image à prédire à l'aide du au moins un vecteur de déplacement du bloc de référence correspond à un bloc voisin d'une zone découverte de l'image à prédire, ledit dispositif comprend :

- des moyens de détermination d'au moins un bloc élargi, comprenant ledit bloc de référence et au moins un point d'un bloc adjacent audit bloc de référence dans ladite image de référence ;
- des moyens de détermination d'une valeur de prédiction pour au moins un point de ladite zone découverte de l'image à prédire, à partir dudit au moins un bloc élargi et du ou desdits vecteurs de déplacement déterminé(s) pour ledit bloc de référence, délivrant une image prédite.

**8.** Signal représentatif d'une séquence d'images codées selon le procédé de codage de la revendication 5, caractérisé en qu'il comprend au moins une information représentative de l'utilisation d'au moins un bloc élargi et/ou de l'élargissement affecté au bloc élargi pour un bloc de référence donné.

**9.** Support d'enregistrement portant un signal représentatif d'une séquence d'images codées selon le procédé de codage de la revendication 5, caractérisé en qu'il comprend au moins un résidu de prédiction issu de ladite étape de codage.

**10.** Procédé de décodage d'un signal représentatif d'une séquence d'images, **caractérisé en ce qu'**il met en oeuvre le procédé de prédiction selon la revendication 1, délivrant une image prédite.

**11.** Procédé de décodage selon la revendication 10, **caractérisé en ce qu'**il met en oeuvre une étape d'extraction d'une information représentative de l'utilisation et/ou de l'élargissement d'au moins un bloc élargi, pour un bloc de référence donné, et **en ce que** ladite étape de prédiction prend en compte ladite information.

**12.** Dispositif de décodage d'un signal représentatif d'une séquence d'images, mettant en oeuvre une prédiction par compensation de mouvement avant à partir d'au moins une image de référence, l'image de référence étant découpée en un ensemble de blocs ne se chevauchant pas et recouvrant toute l'image de référence, la compensation de mouvement avant utilisant des vecteurs de déplacement pointant de l'image de référence vers une image à prédire, engendrant des zones découvertes dans l'image à prédire, le dispositif comprend:

- des moyens de détermination, pour chaque bloc de l'image de référence, d'au moins un vecteur de déplacement représentatif d'un déplacement entre ledit bloc de l'image de référence et un bloc correspondant dans l'image à prédire ;

le dispositif est **caractérisé en ce que**, pour au moins un bloc de l'image de référence, dit bloc de référence, pour lequel un bloc compensé en mouvement avant dans l'image à prédire à l'aide du au moins un vecteur de déplacement du bloc de référence correspond à un bloc voisin d'une zone découverte de l'image à prédire, ledit dispositif comprend :

- des moyens de détermination d'au moins un bloc élargi, comprenant ledit bloc de référence et au moins un point d'un bloc adjacent audit bloc de référence dans ladite image de référence ;
- des moyens de détermination d'une valeur de prédiction pour au moins un point de ladite zone découverte de l'image à prédire, par compensation dudit au moins un bloc élargi en utilisant le ou lesdits vecteurs de déplacement déterminé(s) pour ledit bloc de référence, délivrant une image prédite.

**13.** Programme d'ordinateur comportant des instructions pour la mise en oeuvre d'un procédé selon l'une quelconque des revendications 1, 5 ou 10 lorsque ce programme est exécuté par un processeur.

**Patentansprüche**

**1.** Verfahren zur Prädikation (22) eines zu prädizierenden Bildes durch Vorwärtsbewegungskompensation ausgehend von mindestens einem Referenzbild, wobei das Referenzbild in einen Satz von Blöcken geschnitten wird, die sich nicht überlappen und das ganze Referenzbild bedecken, wobei die Vorwärtsbewegungskompensation Bewegungsvektoren verwendet, die von dem Referenzbild zu dem zu prädizierenden Bild zeigen, wodurch in dem zu prädizierenden Bild unbedeckte Bereiche erzeugt werden, das Verfahren weist die folgenden Schritte auf:

- Bestimmen (221) für jeden Block des Referenzbildes von mindestens einem Bewegungsvektor, der für eine Bewegung zwischen dem Block des Referenzbildes und einem entsprechenden Block in dem zu prädizierenden Bild repräsentativ ist;

wobei das Verfahren **dadurch gekennzeichnet ist, dass** es für mindestens einen Block des Referenzbildes, der Referenzblock genannt wird, für den ein Block, der in dem zu prädizierenden Bild mit Hilfe von mindestens einem Bewegungsvektor des Referenzblocks vorwärtsbewegungskompensiert wird, einem benachbarten Block eines unbedeckten Bereichs des zu prädizierenden Bildes entspricht, die folgenden Schritte aufweist:

- Bestimmen (222) von mindestens einem erweiterten Block, der den Referenzblock und mindestens einen Punkt eines Blocks aufweist, der zu dem Referenzblock in dem Referenzbild benachbart ist;
- Bestimmen (223) eines Prädiktionswerts für mindestens einen Punkt des unbedeckten Bereichs des zu prädizierenden Bildes durch Vorwärtsbewegungskompensation des mindestens einen erweiterten Blocks, indem der oder die Bewegungsvektoren verwendet wird/werden, der/die für den Referenzblock bestimmt wird/werden.

**2.** Verfahren nach Anspruch 1, **dadurch gekennzeichnet, dass** es Folgendes umsetzt:

- einen ersten Durchgang der Prädikation (23) mit Hilfe von mindestens einem Referenzblock, der ein erstes prädiziertes Bild ausstellt;
- einen Schritt des Erfassens (24) von mindestens einem nicht prädizierten Punkt in dem ersten prädizierten Bild;
- und bei erfolgreichem Erfassen (25) einen zweiten Durchgang der Prädikation mit Hilfe von mindestens einem erweiterten Block, derart, dass der zweite Durchgang den Wert von mindestens einem der nicht prädizierten Punkte bestimmt.

**3.** Verfahren zur Prädikation nach Anspruch 1, **da-**

**durch gekennzeichnet, dass** der erweiterte Block bestimmt wird, indem eine Technik umgesetzt wird, die zu der Gruppe gehört, umfassend:

- ein Verschieben aller Kanten des Referenzblocks um einen gleichen Abstand;
- ein Verschieben von mindestens einer Kante des Referenzblocks.

**4.** Verfahren zur Prädikation nach Anspruch 1, **dadurch gekennzeichnet, dass**, wobei mindestens zwei Prädikationswerte für einen gleichen Punkt des zu prädizierenden Bildes bestimmt werden, das Verfahren einen Schritt der Prädikation des Punktes aufweist, der Vertrauenswerte berücksichtigt, die jeweils den Prädikationswerten zugeordnet werden.

**5.** Verfahren zum Codieren einer Sequenz von Bildern, **dadurch gekennzeichnet, dass** es für ein laufendes Bild der Sequenz das Verfahren zur Prädikation nach Anspruch 1 umsetzt, das ein prädiziertes Bild ausstellt.

**6.** Verfahren zum Codieren nach Anspruch 5, **dadurch gekennzeichnet, dass** es einen Schritt des Einfügens in ein Signal, das für die Sequenz von Bildern repräsentativ ist, einer Information umsetzt, die für die Verwendung von mindestens einem erweiterten Block und/oder für die Erweiterung, die dem erweiterten Block für einen bestimmten Referenzblock zugeordnet wird, repräsentativ ist.

**7.** Vorrichtung zum Codieren einer Sequenz von Bildern, die eine Prädikation durch Vorwärtsbewegungskompensation ausgehend von mindestens einem Referenzbild einsetzt, wobei das Referenzbild in einen Satz von Blöcken geschnitten wird, die sich nicht überlappen und das ganze Referenzbild bedecken, wobei die Vorwärtsbewegungskompensation Bewegungsvektoren verwendet, die von dem Referenzbild zu einem zu prädizierenden Bild zeigen, wodurch in dem zu prädizierenden Bild unbedeckte Bereiche erzeugt werden, wobei die Vorrichtung Folgendes aufweist:

- Mittel zum Bestimmen für jeden Block des Referenzbildes von mindestens einem Bewegungsvektor, der für eine Bewegung zwischen dem Block des Referenzbildes und einem entsprechenden Block in dem zu prädizierenden Bild repräsentativ ist;

wobei die Vorrichtung **dadurch gekennzeichnet ist, dass** die Vorrichtung für mindestens einen Block des Referenzbildes, der Referenzblock genannt wird, für den ein Block, der in dem zu prädizierenden Bild mit Hilfe von mindestens einem Bewegungsvektor des Referenzblocks vorwärtsbewegungskompensiert wird, einem benachbarten Block eines unbedeckten Bereichs des zu prädizierenden Bildes entspricht, Folgendes aufweist:

- Mittel zum Bestimmen von mindestens einem erweiterten Block, der den Referenzblock und mindestens einen Punkt eines Blocks aufweist, der zu dem Referenzblock in dem Referenzbild benachbart ist;
- Mittel zum Bestimmen eines Prädikationswerts für mindestens einen Punkt des unbedeckten Bereichs des zu prädizierenden Bildes ausgehend von dem mindestens einen erweiterten Block und von dem oder den Bewegungsvektoren, der/die für den Referenzblock bestimmt wird/werden, der ein prädiziertes Bild ausstellt.

8. Signal, das für die Sequenz von Bildern repräsentativ ist, die nach dem Verfahren zum Codieren nach Anspruch 5 codiert werden, **dadurch gekennzeichnet, dass** es mindestens eine Information aufweist, die für die Verwendung von mindestens einem erweiterten Block und/oder für die Erweiterung, die dem erweiterten Block für einen bestimmten Referenzblock zugeordnet wird, repräsentativ ist.

9. Aufzeichnungsmedium, das ein Signal trägt, das für eine Sequenz von Bildern repräsentativ ist, die nach dem Verfahren zum Codieren nach Anspruch 5 codiert werden, **dadurch gekennzeichnet, dass** es mindestens einen Prädiktionsrest aufweist, der aus dem Schritt des Codierens hervorgegangen ist.

10. Verfahren zum Decodieren eines Signals, das für eine Sequenz von Bildern repräsentativ ist, **dadurch gekennzeichnet, dass** es das Verfahren zur Prädikation nach Anspruch 1 umsetzt, das ein prädiziertes Bild ausstellt.

11. Verfahren zum Decodieren nach Anspruch 10, **dadurch gekennzeichnet, dass** es einen Schritt des Extrahierens einer Information, die für die Verwendung und/oder für die Erweiterung von mindestens einem erweiterten Block repräsentativ ist, für einen bestimmten Referenzblock umsetzt, und dadurch, dass der Schritt der Prädikation die Information berücksichtigt.

12. Vorrichtung zum Decodieren eines Signals, das für eine Sequenz von Bildern repräsentativ ist, die eine Prädikation durch Vorwärtsbewegungskompensation ausgehend von mindestens einem Referenzbild einsetzt, wobei das Referenzbild in einen Satz von Blöcken geschnitten wird, die sich nicht überlappen und das ganze Referenzbild bedecken, wobei die Vorwärtsbewegungskompensation Bewegungsvektoren verwendet, die von dem Referenzbild zu dem zu prädizierenden Bild zeigen, wodurch in dem zu prädizierenden Bild unbedeckte Bereiche erzeugt werden, wobei die Vorrichtung Folgendes aufweist:

- Mittel zum Bestimmen für jeden Block des Referenzbildes von mindestens einem Bewegungsvektor, der für eine Bewegung zwischen dem Block des Referenzbildes und einem entsprechenden Block in dem zu prädizierenden Bild repräsentativ ist;

wobei die Vorrichtung **dadurch gekennzeichnet ist, dass** die Vorrichtung für mindestens einen Block des Referenzbildes, der Referenzblock genannt wird, für den ein Block, der in dem zu prädizierenden Bild mit Hilfe von mindestens einem Bewegungsvektor des Referenzblocks vorwärtsbewegungskompensiert wird, einem benachbarten Block eines unbedeckten Bereichs des zu prädizierenden Bildes entspricht, Folgendes aufweist:

- Mittel zum Bestimmen von mindestens einem erweiterten Block, der den Referenzblock und mindestens einen Punkt eines Blocks aufweist, der zu dem Referenzblock in dem Referenzbild benachbart ist;
- Mittel zum Bestimmen eines Prädikationswerts für mindestens einen Punkt des unbedeckten Bereichs des zu prädizierenden Bildes durch Kompensation des mindestens einen erweiterten Blocks unter Verwendung von dem oder den Bewegungsvektoren, der/die für den Referenzblock bestimmt wird/werden, der ein prädiziertes Bild ausstellt.

13. Computerprogramm, das Anweisungen zum Umsetzen eines Verfahrens nach einem der vorhergehenden Ansprüche 1, 5 oder 10 aufweist, wenn dieses Programm von einem Prozessor ausgeführt wird.

**Claims**

1. Method for predicting (22) an image to be predicted, through forward motion compensation on the basis of at least one reference image, the reference image being divided into a set of non-overlapping blocks that cover the entire reference image, the forward motion compensation using displacement vectors pointing from the reference image to the image to be predicted, leading to uncovered zones in the image to be predicted,
said method comprising the following steps:

- for each block of the reference image, determining (221) at least one displacement vector representative of a displacement between said block of the reference image and a corresponding block in the image to be predicted;

said method being **characterized in that** it comprises the following steps, for at least one block of the reference image, termed reference block, for which a forward-motion-compensated block in the image to be predicted with the use of the at least one displacement vector of the reference block corresponds to a block in the vicinity of an uncovered zone of the image to be predicted:

- determining (222) at least one enlarged block, comprising said reference block and at least one point on a block adjacent to said reference block in said reference image;
- determining (223) a prediction value for at least one point on said uncovered zone of the image to be predicted through forward motion compensation of said at least one enlarged block by using the or said displacement vector(s) determined for said reference block.

2. Prediction method according to Claim 1, **characterized in that** it implements:

- a first prediction pass (23) with the use of at least one reference block, delivering a first predicted image;
- a step (24) of detecting at least one non-predicted point in said first predicted image;
- and, in the event of a positive detection (25), a second prediction pass with the use of at least one enlarged block, such that said second pass determines the value of at least one of said non-predicted points.

3. Prediction method according to Claim 1, **characterized in that** said enlarged block is determined by implementing a technique belonging to the group comprising:

- a displacement of all of the edges of said reference block by one and the same distance;
- a displacement of at least one edge of said reference block.

4. Prediction method according to Claim 1, **characterized in that**, at least two prediction values being determined for one and the same point on the image to be predicted, said method comprises a step of predicting said point that takes into account confidence values that are each assigned to said prediction values.

5. Method for encoding a sequence of images, **characterized in that** it implements, for a current image of said sequence, the prediction method according to Claim 1, delivering a predicted image.

6. Encoding method according to Claim 5, **character-**

**ized in that** it implements a step of inserting, into a signal representative of said sequence of images, an item of information representative of the use of at least one enlarged block and/or of the enlargement assigned to the enlarged block for a given reference block.

7. Device for encoding a sequence of images, implementing a prediction through forward motion compensation on the basis of at least one reference image, the reference image being divided into a set of non-overlapping blocks that cover the entire reference image, the forward motion compensation using displacement vectors pointing from the reference image to an image to be predicted, leading to uncovered zones in the image to be predicted, the device comprising:

- means for determining, for each block of the reference image, at least one displacement vector representative of a displacement between said block of the reference image and a corresponding block in the image to be predicted;

the device being **characterized in that**, for at least one block of the reference image, termed reference block, for which a forward-motion-compensated block in the image to be predicted with the use of the at least one displacement vector of the reference block corresponds to a block in the vicinity of an uncovered zone of the image to be predicted, said device comprises:

- means for determining at least one enlarged block, comprising said reference block and at least one point on a block adjacent to said reference block in said reference image;
- means for determining a prediction value for at least one point on said uncovered zone of the image to be predicted on the basis of said at least one enlarged block and of the or said displacement vector(s) determined for said reference block, delivering a predicted image.

8. Signal representative of a sequence of encoded images according to the encoding method of Claim 5, **characterized in that** it comprises at least one item of information representative of the use of at least one enlarged block and/or of the enlargement assigned to the enlarged block for a given reference block.

9. Recording medium carrying a signal representative of a sequence of encoded images according to the encoding method of Claim 5, **characterized in that** it comprises at least one prediction residual resulting from said encoding step.

**10.** Method for decoding a signal representative of a sequence of images, **characterized in that** it implements the prediction method according to Claim 1, delivering a predicted image.

**11.** Decoding method according to Claim 10, **characterized in that** it implements a step of extracting an item of information representative of the use and/or of the enlargement of at least one enlarged block, for a given reference block, and **in that** said prediction step takes into account said item of information.

**12.** Device for decoding a signal representative of a sequence of images, implementing a prediction through forward motion compensation on the basis of at least one reference image, the reference image being divided into a set of non-overlapping blocks that cover the entire reference image, the forward motion compensation using displacement vectors pointing from the reference image to an image to be predicted, leading to uncovered zones in the image to be predicted, the device comprising:

- means for determining, for each block of the reference image, at least one displacement vector representative of a displacement between said block of the reference image and a corresponding block in the image to be predicted;

the device being **characterized in that**, for at least one block of the reference image, termed reference block, for which a forward-motion-compensated block in the image to be predicted with the use of the at least one displacement vector of the reference block corresponds to a block in the vicinity of an uncovered zone of the image to be predicted, said device comprises:

- means for determining at least one enlarged block, comprising said reference block and at least one point on a block adjacent to said reference block in said reference image;
- means for determining a prediction value for at least one point on said uncovered zone of the image to be predicted through compensation of said at least one enlarged block by using the or said displacement vector(s) determined for said reference block, delivering a predicted image.

**13.** Computer program including instructions for the implementation of a method according to any one of Claims 1, 5 or 10 when this program is executed by a processor.

Fig. 1A

Fig. 1B

$b_R$

221 — $vb_R$

22

222 — $b_R \mapsto b_E$

223 — $RP(x)$

## Fig. 2A

23 —

24 —

25 —

## Fig. 2B

Fig. 3A

Fig. 3B

Fig. 4A

Fig. 4B

Fig. 4C

| E | $T_E$ | flag_lc | flag_tc | |
|---|---|---|---|---|

Fig. 5

61

62

63

Fig. 6

72

μP

71    M        Pg    73

Fig. 7

82

μP

81    M        Pg    83

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0756007

- FR 0854465

**Littérature non-brevet citée dans la description**

- Motion compensation using spatial transformations with forward mapping. **SHARAF A et al.** SIGNAL PROCESSING: IMAGE COMMUNICATION. ELSEVIER SCIENCE PUBLISHERS, 04 Janvier 1999, vol. 14, 209-227

- **L. Y. WEI ; M. LEVOY.** Fast Texture Synthesis using Tree-structured Vector Quantization. *Proceeding of SIG-GRAPH,* Juillet 2000, 479-488
- **T. K. TAN ; C. S. BOON ; Y. SUZUKI.** Intra prediction by template matching. *Proceedings of ICIP,* 2006, 1693-1696